Europäisches Patentamt

European Patent Office

Office européen des brevets

(19)

(11) Veröffentlichungsnummer: **0 090 935**

**A2**

(12) **EUROPÄISCHE PATENTANMELDUNG**

(21) Anmeldenummer: 83101607.6

(22) Anmeldetag: 19.02.83

(51) Int. Cl.³: **B 62 K 15/00**

(30) Priorität: 06.04.82 DE 3212783

(43) Veröffentlichungstag der Anmeldung:
12.10.83 Patentblatt 83/41

(84) Benannte Vertragsstaaten:
BE DE FR GB IT NL

(71) Anmelder: Gebr. Happich GmbH
Postfach 10 02 49 Clausenbrücke 1
D-5600 Wuppertal 1(DE)

(72) Erfinder: Andräs, Kurt
Reichswaldallee 70
D-4000 Düsseldorf 30(DE)

(72) Erfinder: Karrer, Peter
Montanusweg 1
D-5657 Haan(DE)

(54) Zerlegbares Fahrrad.

(57) Bei einem zerlegbaren Fahrrad mit einem Fahrradrahmen, der mindestens zwei längs verlaufende Hauptstreben aufweist, die jeweils aus zwei lösbar miteinander verbundenen Strebenteilen bestehen, ist vorgesehen, die Strebenteile zumindest einer Hauptstrebe durch eine Steckverbindung miteinander zu verbinden und die Steckverbindung durch ein Arretierungselement zu sichern.

FIG. 1

EP 0 090 935 A2

- 1 -

H 961/962                                         Pom/Sch. 5.4.1982

GEBR. HAPPICH GMBH, D 5600 WUPPERTAL
Bundesrepublik Deutschland

Zerlegbares Fahrrad

Die Erfindung bezieht sich auf ein zerlegbares Fahrrad mit einem Fahrradrahmen, der mindestens zwei längs verlaufende Hauptstreben aufweist, die jeweils aus zwei lösbar miteinander verbundenen Strebenteilen bestehen.

Die bekannten Fahrräder, die im zusammengelegten Zustand im Kofferraum eines Personenkraftwagens untergebracht werden können, entsprechen hinsichtlich der Rahmen und der Räder, was deren Größe angeht, Kinderfahrrädern, die aber festigkeitsmäßig und hinsichtlich der Entfernung zwischen Lenker und Sattelstütze wie Fahrräder für Erwachsene bemessen sind. Diese Fahrräder bestehen aus zwei durch Scharniere verbundenen Teilen. Diese Bauweise bedingt einen besonders ausgebildeten kleinen Rahmen und gegen Einknicken gesicherte Scharniere, die relativ umfänglich und schwer sind. Wenn diese bekannten Fahrräder auch fertigkeitsmäßig und hinsichtlich der Entfernung zwischen Lenker und Sattelstütze wie Fahrräder für Erwachsene bemessen sind, sehen sie wegen der überaus kleinen Rahmen- und Rädergröße nicht nur wie Kinderfahrräder aus, sondern sie weisen auch einen entsprechend geringen Fahrkomfort auf, der den Ansprüchen erwachsener Fahrradfahrer im allgemeinen nicht gerecht wird.

Neben diesen zusammenlegbaren Fahrrädern ist ein in zwei Teile zerlegbares Fahrrad durch die DE-OS 15 05 242 bekanntgeworden, welches "Normalgröße", d. h. Räder von z. B. 26" aufweisen kann. Die Fahrradteile werden durch Verbindungselemente zusammengehalten. Als Verbindungselemente sind kurze Hülsen vorgesehen, die in je einen Ringflansch mit konisch nach außen hin abgeflachter Rückfläche enden, welche an jedem der beim Zusammensetzen eines aus zwei voneinander getrennten Teilen bestehenden Fahrrades aneinanderstoßenden Enden der Rahmenteile angebracht sind, wobei die beiden Ringflansche eines zusammenwirkenden Hülsenpaares mit einem analog konisch erweiterte Seitenflanken aufweisenden Nutring überfaßt und zusammengehalten sind. Der Nutring besteht, um überhaupt montiert werden zu können, aus zwei Halbschalen, die in einem einstückigen Spannband sitzen, das an seinen Enden Spannköpfe aufweist und durch mindestens eine durchgesteckte Spannschraube zusammengezogen wird.

Das Fahrrad nach der DE-OS 15 05 242 eröffnet zwar die vorteilhafte Möglichkeit, Fahrräder von Normalgröße in zwei Teile zerlegen und damit im Kofferraum eines Personenkraftwagens unterbringen zu können, jedoch erscheint die dabei vorgesehene Verbindung der beiden Fahrradteile nicht unbedingt zuverlässig sicher zu sein. Dem Grunde nach sind als Verbindungselemente Spannbänder, wie sie z. B. als Schlauchklemmen bekannt sind, vorgesehen, deren ausreichende Festigkeit aber nur dann gewährleistet sein kann, wenn sie aus hochwertigem, damit aber dann teurerem Material bestehen. Auch wird der Zusammenhalt der Spannbänder ausschließlich durch die die Spannköpfe durchsetzende Spannschraube bewirkt, was insofern nachteilig ist, als eine Spannschraube leicht überdreht werden kann. Dabei muß insbesondere berück-

sichtigt werden, daß Fahrräder oftmals auch von solchen Radfahrern benutzt werden, denen es völlig unbekannt ist, bis zu welchem maximalen Drehmoment eine Spannschraube angezogen werden darf. Weiterhin trägt die bei dem Fahrrad nach der DE-OS 15 05 242 vorgesehene Verbindung für die Fahrradteile auf, was zunächst unschön wirkt, insbesondere aber dazu führen kann, daß Fahrradbenutzer daran mit Kleidungsstücken hängenbleiben und sich diese zerreißen oder gar zu Fall kommen.

Die der Erfindung zugrunde liegende Aufgabe besteht nun darin, ein zerlegbares, im Kofferraum eines Personenkraftwagens unterzubringendes Fahrrad jeder gängigen Größe zur Verfügung zu stellen, das schnell und einfach in zwei Teile zerlegt und ebenso schnell und einfach wieder zusammengesetzt werden kann, das sich im zusammengesetzten Zustand praktisch nicht von einem einteiligen Normalfahrrad unterscheidet und das den Sicherheitsanforderungen, insbesondere in bezug auf die Verbindungsstellen der beiden Fahrradteile in vollem Umfange entspricht.

Gemäß der Erfindung wird diese Aufgabe durch eine Steckverbindung zwischen den Strebenteilen, zumindest einer Hauptstrebe und durch ein die Strebenteile zusammenhaltendes Arretierungselement gelöst.

Eine Steckverbindung ist eine Verbindung, deren Herstellung keine besonderen Anforderungen an die Geschicklichkeit der Fahrradbenutzer stellt und damit auch handwerklich ungeschickte Fahrradbenutzer nicht überfordert. Andererseits ist eine Steckverbindung eine solche, die sich wegen der überlappenden bzw. ineinandergreifenden Bereiche durch eine erhöhte Festigkeit und Biegesteifigkeit auszeichnet. Der sichere Zusammenhalt der Steckverbindung ist durch die erfindungsgemäße Maßnahme, hierfür ein Arretierungselement vorzusehen, unbedingt gewährleistet.

Bei Fahrrädern, bei denen die längs verlaufenden Hauptstreben parallel zueinander ausgerichtet sind, ist es von Vorteil, wenn die Strebenteile jeder Hauptstrebe über eine Steckverbindung miteinander kuppelbar sind.

Bei der erfindungsgemäßen Steckverbindung ist insbesondere an ein koaxiales Ineinanderstecken der miteinander zu verbindenden Strebenteile gedacht. Damit die Steckverbindung nicht aufträgt oder sonstwie das angenehme Erscheinungsbild des zusammengesetzten Fahrrades beeinträchtigt, ist nach einem weiteren Merkmal der Erfindung vorgesehen, daß eines der jeweils miteinander zu verbindenden Strebenteile einendig einen Steckzapfen und das andere Strebenteil eine diesem angepaßte Aufnahmemuffe aufweist. Dabei ist vorzugsweise weiterhin vorgesehen, daß der Durchmesser des Steckzapfens kleiner als der Außendurchmesser des zugehörigen Strebenteils ist, während der Außendurchmesser der Aufnahmemuffe dem des zugehörigen Strebenteils entspricht. Damit ergibt sich für die Hauptstreben der visuelle Eindruck eines ununterbrochen durchlaufenden Rahmenteils, denn die Stoßnaht zwischen den Strebenteilen ist nur bei sehr sorgfältiger Inaugenscheinnahme sichtbar.

Der Steckzapfen und die Aufnahmemuffe können als aus Rundstahlabschnitten od. dgl. gedrehte Formteile ausgebildet sein und in die Strebenteilenden eingesetzt und mit diesen durch Schweißen, Löten oder Kleben untrennbar verbunden sein. Es handelt sich hierbei um kostengünstig herzustellende Automatendrehteile, durch die auch das Gewicht des Fahrrades nicht nenneswert erhöht wird.

Bei Fahrrädern, deren Rahmen nicht mit parallel zueinander verlaufenden Hauptstreben ausgebildet sind, ist nach einem weiteren bevorzugten Merkmal der Erfindung vorgesehen, daß Die nicht über eine Steckverbindung miteinander verbundenen Strebenteile der zweiten (oder jeder weiteren) Hauptstrebe an ihren freien Endbereichen klauenartige Ansätze aufweisen, die sich wechselseitig überlappen und durch ein Arretierungselement aneinander festlegbar sind. Dadurch ergibt sich eine problemlose Verbindung der Strebenteile.

Zweckmäßigerweise sind die sich miteinander zum Strebendurchmesser ergänzenden klauenartigen Ansätze als separat gefertigte Metallgußteile ausgebildet und weisen jeweils einen untrennbar mit dem zugehörigen Strebenteil verbundenen Fußteil auf.

Als Arretierungselemente können Kugelschnappverschlüsse, Sprengringe od. dgl. vorgesehen sein. Gemäß der Erfindung wird jedoch eine ebenso kostengünstige wie zuverlässige Lösung bevorzugt, die darin besteht, daß die zum Zusammenhalten der Strebenteile vorgesehenen Arretierungselemente aus die Steckverbindung und die klauenartigen Ansätze querende Gewindebolzen bestehen. Die Gewindebolzen sind dabei jeweils mit einem ggf. einen Innensechskant aufweisenden Schraubenkopf ausgebildet und die bereichsweise mit einem Innengewinde versehenen Aufnahmebohrungen weisen jeweils einendig eine Bohrungserweiterung zur versenkten Aufnahme der Schraubenköpfe auf. Die Maßnahme, als Arretierungselemente Gewindebolzen einzusetzen, ist insofern von Vorteil, als Gewindebolzen relativ preiswert und einfach in der Handhabung sind. Die Gewindebolzen genügen im vorliegenden Fall auch in hinreichendem Maße den Sicherheitsanforderungen, da sie nicht nennenswert belastet werden; denn sie dienen im Bereich der Steckverbindung lediglich als Axialsicherung und im Bereich der Klauenverbindung lediglich dem Zusammenhalt der aneinanderliegenden klauenartigen Ansätze.

Eine weitere Ausgestaltung der Erfindung kann darin bestehen, daß die Aufnahmemuffe eine radiale Stecköffnung für einen Gewindebolzen aufweist, von der sich ein am freien Ende der Aufnahmemuffe auslaufender Schlitz erstreckt, der nach Art eines Bajonettverschlusses winkelförmig verläuft, indem er sich, ausgehend von der Stecköffnung, zunächst ein Stück in Umfangsrichtung und dann in axialer Richtung erstreckt, wobei der Schlitz eine Breite aufweist, die zumindest geringfügig größer als der Durchmesser des Gewindebolzens ist. Die Ausbildung des Schlitzes erlaubt es, die Steckverbindung ohne vollständiges Herausdrehen des hier vorgesehenen Gewindebolzens zu lösen (nur der Schraubenkopf muß aus dem Schlitz herausragen), während der Gewindebolzen im Bereich der klauenartigen Ansätze völlig auszuschrauben ist. Durch die bajonettartige Gestaltung des Schlitzes läßt sich eine Zusammenfügung der Steckverbindung nur in einer Schräglage eines der Fahrradteile, bei der die Hauptstreben also nicht auf einer gemeinsamen vertikalen Ebene liegen, durchführen, wodurch aber verhindert wird, daß die klauenartigen Ansätze aneinanderecken, was zu Lackabsplitterungen führen könnte.

Ein Ausführungsbeispiel der Erfindung wird nachfolgend anhand der Zeichnung näher erläutert. Es zeigen

Fig. 1 das zerlegbare Fahrrad in Ansicht,

Fig. 2 einen Schnitt II - II nach Fig. 1,

Fig. 3 einen Schnitt III - III nach Fig. 2,

Fig. 4 einen Schnitt IV - IV nach Fig. 1,

Fig. 5 einen Schnitt V - V nach Fig. 4 und

Fig. 6 eine Einzelheit der Erfindung.

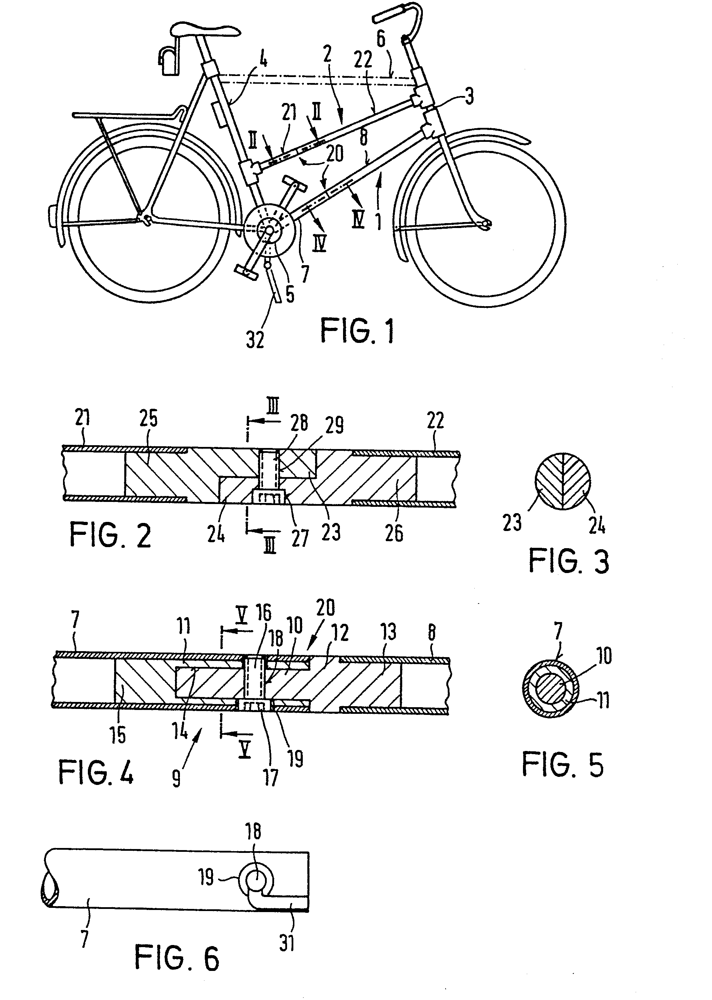

Das Fahrrad nach Fig. 1 weist einen Fahrradrahmen mit zwei längs verlaufenden Hauptstreben 1 und 2 auf, die die vordere Lenkstangenhülse 3 mit der hinteren Sattelstrebe 4 bzw. mit dem Tretlager 5 verbinden.

Um dem Fahrrad den Charakter eines Herrenfahrrades zu verleihen, kann, wie mit strichpunktierten Linien angedeutet, eine obere horizontal ausgerichtete Hauptstrebe 6 alternativ oder auch zusätzlich zur geneigt verlaufenden Hauptstrebe 2 vorgesehen sein.

Die Hauptstrebe 1 besteht aus zwei koaxial hintereinander angeordneten Strebenteilen 7 und 8, die über eine in Fig. 4 und 5 im einzelnen dargestellte Steckverbindung 9 miteinander gekuppelt sind. Die Steckverbindung 9 setzt sich aus einem Steckzapfen 10 und einer diesen aufnehmenden Aufnahmemuffe 11 zusammen. An den Steckzapfen 10 schließt sich zunächst ein dem Außendurchmesser des Strebenteils 8 entsprechender Bund 12 und wiederum daran ein dem Innendurchmesser des Strebenteils 8 angepaßter Fußteil 13 an, welcher untrennbar mit dem Strebenteil 8 durch Schweißen, Löten oder Kleben verbunden ist. Steckzapfen 10, Bund 12 und Fußteil 13 sind als einstückiges, vorzugsweise gedrehtes Bauteil ausgebildet.

Die Aufnahmemuffe 11 weist eine den Steckzapfen 10 mit möglichst geringem Spiel aufnehmende Bohrung 14 auf. Die Aufnahmemuffe 11 ist über ihre gesamte Länge, also einschließlich ihres Fußteils 15, vom Endabschnitt des Strebenteils 7 aufgenommen und hier durch Kleben, Schweißen oder Löten unlösbar festgelegt. Sie ist zweckmäßigerweise ebenfalls als aus einem Rundstahlabschnitt od. dgl. gedrehtes Formteil ausgebildet.

Die Steckverbindung 9 ist durch einen sie querenden Gewindebolzen 16 mit Schraubenkopf 17 gesichert. Die für die Aufnahme des Gewindebolzens 16 vorgesehene Bohrung 18 durchsetzt das Strebenteil 7, die Aufnahmemuffe 11 sowie den Steckzapfen 10, ist bereichsweise mit einem Innengewinde und mit einer Bohrungserweiterung 19 zur versenkten Aufnahme des Schraubenkopfes 17 versehen.

Durch die Steckverbindung 9 sind die Strebenteile 7 und 8 derart miteinander verbunden, daß der Eindruck entsteht, als würde die Hauptstrebe 1 einstückig durchlaufend ausgebildet sein, weil die Stoßnaht 2o zwischen den Stirnenden der Strebenteile 7 und 8 kaum sichtbar ist.

Zur Verbindung der Endbereiche der die Hauptstrebe 2 bildenden Strebenteile 21 und 22 sind klauenartige Ansätze 23, 24 vorgesehen, die jeweils eine etwa halbkreisförmige Querschnittsfläche aufweisen und sich im einanderanliegenden Zustand zum vollen Kreisquerschnitt mit einem den Strebenteilen 21 und 22 entsprechenden Durchmesser ergänzen. Die klauenartigen Ansätze 23 und 24 sind jeweils einstückig mit einem dem Innendurchmesser der Strebenteile 21 und 22 angepaßten Fußteil 25 und 26 ausgebildet, welche untrennbar mit den zugehörigen Strebenteilen 21 und 22 verbunden sind.

Die klauenartigen Ansätze 23 werden durch einen mit Kopf 27 versehenen Gewindebolzen 28 zusammengehalten, für dessen Aufnahme eine sie querende Bohrung 29 mit einer Bohrungserweiterung 3o für den Kopf 27 vorgesehen ist, wobei die Bohrung 29 in dem klauenartigen Ansatz 23 ein Innengewinde aufweist.

Wie Fig. 6 zeigt, setzt sich die Bohrung 18 der Steckverbindung 9 in einen nach Art eines Bajonettverschlusses winkelförmig verlaufenden Schlitz 31 fort, welcher am freien Ende des Strebenteils 7 ausläuft.

Das Fahrrad nach Fig. 1 kann nach Herausdrehen des Gewindebolzens 28 und Lösen des Gewindebolzens 16 ersichtlich einfach in zwei Teile zerlegt werden, die bequem im Koffenraum eines Personenkraftwagens untergebracht werden können. Ebenso schnell und einfach kann das Fahrrad über die Steck- und Klauenverbindung wieder fahrbereit gemacht werden. Damit beim Zerlegen des Fahrrades ein Umfallen des hinteren Fahrradteiles oder ein Festhaltenmüssen desselben vermieden wird, empfiehlt es sich, das Fahrrad mit einem ein Aufbocken ermöglichenden Doppelarmständer 32 auszurüsten.

Selbstverständlich ist bei dem erfindungsgemäßen Fahrrad Vorsorge dafür getroffen, daß der Lenker in einfacher Weise parallel zum Vorderrad ausgerichtet werden kann, damit das Fahrradvorderteil besonders platzsparend untergebracht werden kann. Im Bedarfsfall kann auch vorgesehen werden, die Pedale einklappbar an den Pedalträgern zu lagern. Weiterhin ist es selbstverständlich möglich, das Fahrrad mit oder ohne Gangschaltung auszubilden und es in Leichtbauweise mit einem Leichtmetallrahmen herzustellen.

0090935

H 961/962                                    5.4.82 Pom/Sch.

Patentansprüche

1. Zerlegbares Fahrrad mit einem Fahrradrahmen, der mindestens zwei längs verlaufende Hauptstreben (1, 2, 6) aufweist, die jeweils aus zwei lösbar miteinander verbundenen Strebenteilen (7, 8 bzw. 21, 22) bestehen, gekennzeichnet durch eine Steckverbindung (9) zwischen den Strebenteilen (7, 8 bzw. 21, 22), zumindest einer Hauptstrebe (1, 2, 6) und durch ein die Strebenteile (7, 8 bzw. 21, 22) zusammenhaltendes Arretierungselement.

2. Fahrrad nach Anspruch 1, dadurch gekennzeichnet, daß die Strebenteile (7, 8 bzw. 21, 22) jeder Hauptstrebe (1,2,6) über eine Steckverbindung (9) miteinander kuppelbar sind.

3. Fahrrad nach Anspruch 1 oder 2, dadurch gekennzeichnet, daß eines der jeweils miteinander zu verbindenden Strebenteile (8) einendig einen Steckzapfen (1o) und das andere Strebenteil (7) eine diesem angepaßte Aufnahmemuffe (11) aufweist.

4. Fahrrad nach Anspruch 3, dadurch gekennzeichnet, daß der Durchmesser des Steckzapfens (1o) kleiner als der Außendurchmesser des zugehörigen Strebenteils (8) ist, während der Außendurchmesser der Aufnahmemuffe (11) dem des zugehörigen Strebenteils (7) entspricht.

5. Fahrrad nach Anspruch 3 oder 4, dadurch gekennzeichnet, daß der Steckzapfen (1o) und die Aufnahmemuffe (11) als aus Rundstahlabschnitten od. dgl. gedrehte Formteile ausgebildet sind, die in die Strebenteilenden eingesetzt und mit diesen durch Schweißen, Löten oder Kleben untrennbar verbunden sind.

6. Fahrrad nach einem oder mehreren der Ansprüche 1 bis 5, dadurch gekennzeichnet, daß die Strebenteile (21, 22) der zweiten (oder jeder weiteren) Hauptstrebe (2, 6) an ihren freien Endbereichen klauenartige Ansätze (23, 24) aufweisen, die sich wechselseitig überlappen und durch ein Arretierungselement aneinander festlegbar sind.

7. Fahrrad nach Anspruch 6, dadurch gekennzeichnet, daß die sich miteinander zum Strebendurchmesser ergänzenden klauenartigen Ansätze (23, 24) als Metallgußteile ausgebildet sind und jeweils einen untrennbar mit dem zugehörigen Strebenteil (21, 22) verbundenen Fußteil (25, 26) aufweisen.

8. Fahrrad nach einem oder mehreren der Ansprüche 1 bis 7, dadurch gekennzeichnet, daß die zum Zusammenhalten der Strebenteile (7, 8 bzw. 21, 22) vorgesehenen Arretierungselemente aus die Steckverbindung (9) und die klauenartigen Ansätze (23, 24) querende Gewindebolzen (16, 28) bestehen.

9. Fahrrad nach Anspruch 8, dadurch gekennzeichnet, daß die Gewindebolzen (16, 28) jeweils mit einem ggf. einen Innensechskant aufweisenden Schraubenkopf (17, 27) ausgebildet sind und daß die bereichsweise mit einem Innengewinde versehenen Aufnahmebohrungen (18, 29) jeweils einendig eine Bohrungserweiterung (19, 30) zur versenkten Aufnahme der Schraubenköpfe (17, 27) aufweisen.

10. Fahrrad nach einem oder mehreren der Ansprüche 1 bis 9, dadurch gekennzeichnet, daß die Aufnahmemuffe (11) eine radiale Stecköffnung (18, 19) für einen Gewindebolzen (16) aufweist, von der sich ein am freien Ende der Aufnahmemuffe (11) auslaufender Schlitz (31) erstreckt, der nach Art eines Bajonettverschlusses winkelförmig verläuft, indem er sich, ausgehend von der Stecköffnung (18, 19) zunächst ein Stück in Umfangsrichtung und dann in axialer Richtung erstreckt, wobei der Schlitz (31) eine Breite aufweist, die zumindest geringfügig größer als der Durchmesser des Gewindebolzens (16) ist

FIG. 1

FIG. 2

FIG. 3

FIG. 4

FIG. 5

FIG. 6

0090935